# EUROPEAN PATENT APPLICATION

(11) **EP 1 401 187 A2**
(43) Date of publication of application: **24.03.2004**
(21) Application number: 03103436.6
(22) Date of filing: 18.09.2003
(51) Int. Cl.: H04N 1/00

(54) **Method and apparatus for incrementally displacing recording media in an imaging system.**

(30) Priority: 18.09.2002 US 246649
(71) Applicant: Agfa Corporation, Ridgefield Park, NJ 07660-2199 (US)
(72) Inventor: Herbert, James, 03109, Manchester (US)
(74) Representative: Van Ostaeyen, Marc Albert Jozef

(57) **Abstract**

The present invention provides an apparatus and method for incrementally displacing a supply of recording media (24), such as a printing plate, past a scanning system (26). The apparatus includes an entrance platen (28), an exit platen (30), and
a reference platen (32), movable between a first position (POSITION
1) adjacent the entrance platen (28) and a second position (POSITION
2) adjacent the exit platen (30), for incrementally displacing recording media (24) past the scanning system (26).

## Description

### FIELD OF THE INVENTION

The present invention relates to a method and apparatus for incrementally displacing a supply of recording media, such as a printing plate, past a scanning system.

### BACKGROUND OF THE INVENTION

In existing electronic pre-press systems, images to be printed by offset printing are typically scanned from photographic sources and digitized or captured using a digital camera. The digitized images are then transmitted to a raster image processor (RIP) for half-tone screening and image rasterization. The rasterized image is then transmitted to an imaging system such as an imagesetter or platesetter where the rasterized image is recorded onto a supply of recording media. The recording media may comprise film, printing plates, etc.

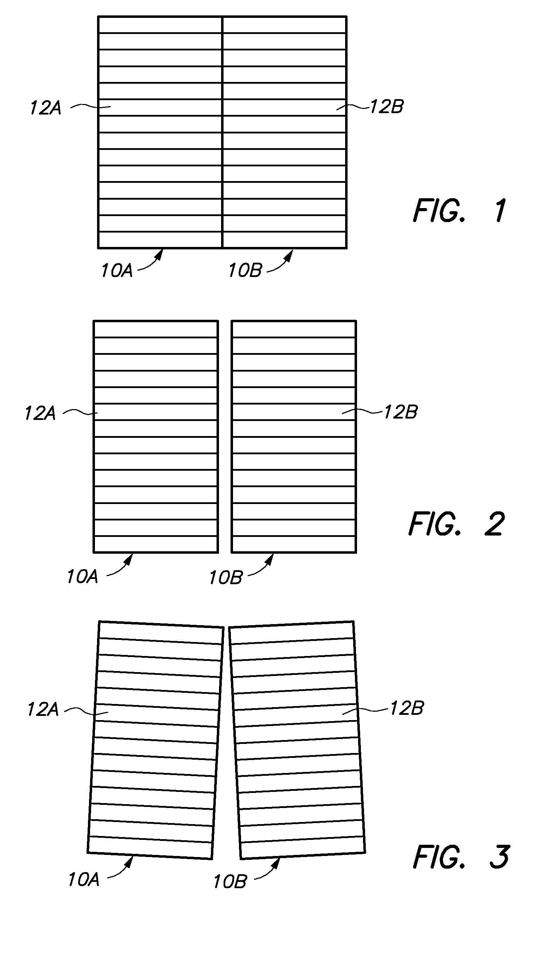

In flat-field imaging systems, the recording media is often incrementally displaced across a flat support surface past a scanning system during the recording process. The scanning system is moved across the recording media in a direction that is perpendicular to the direction of travel of the recording media such that the rasterized image is recorded on the recording media in a series of bands each comprising a plurality of partial scan lines. Examples of two adjacent bands are illustrated in FIGS. 1-3.

FIG. 1 illustrates a first, ideal case where two adjacent bands 10A, 10B, have been recorded on a supply of recording media such that the corresponding partial scan lines 12A, 12B, in each band 10A, 10B, are aligned and butt up against each other. FIG. 2 illustrates a second case where the two adjacent bands 10A, 10B, have been recorded on a supply of recording media such that the corresponding partial scan lines 12A, 12B, in each band 10A, 10B, are aligned, but do not butt up against each other. In this case, known software algorithms, such as those described in U.S. Patent No. 6,097,418, may be used to compensate for the in-scan error. FIG. 3 illustrates a third case where the two adjacent bands 10A, 10B, have been recorded on a supply of recording media such that the corresponding partial scan lines 12A, 12B, in each band 10A, 10B, are not aligned and do not butt up against each other. This situation may occur, for example, because of steering effects that commonly occur when nip rollers are used to incrementally displace the recording media under the scanning system. Depending upon the degree of misalignment, deleterious artifacts may appear in the images printed using the affected recording media.

### SUMMARY OF THE INVENTION

The above-mentioned problems are solved by an apparatus having the specific features set out in claim 1 and a method according to claim 8. Specific features for preferred embodiments of the invention are set out in the dependent claims.

The present invention provides a method and apparatus for incrementally displacing a supply of recording media, such as a printing plate, past a scanning system.

Generally, the present invention provides an apparatus comprising an entrance platen, an exit platen and a reference platen, movable between a first position adjacent the entrance platen and a second position adjacent the exit platen, for incrementally displacing recording media past a scanning system.

The present invention further provides a flat-field imaging system comprising a scanning system for recording data on a supply of recording media, an entrance platen, an exit platen and a reference platen, movable between a first position adjacent the entrance platen and a second position adjacent the exit platen, for incrementally displacing the recording media past the scanning system.

The present invention also provides a method for incrementally displacing a supply of recording media, comprising: securing the recording media to a reference platen; displacing the recording media by displacing the reference platen from a first position adjacent an entrance platen to a second position adjacent an exit platen; securing the recording media to at least one of the entrance platen and the exit platen; releasing the recording media from the reference platen; and displacing the reference platen from the second position to the first position while holding the recording media stationary.

Advantages and further embodiments of the present invention will become apparent from the following description and drawings.

### BRIEF DESCRIPTION OF THE DRAWINGS

The features of the present invention will best be understood from a detailed description of the invention and embodiments thereof selected for the purpose of illustration and shown in the accompanying drawings in which:
FIG. 1 illustrates two adjacent bands with partial scan lines that are aligned and butt up against each other.
FIG. 2 illustrates two adjacent bands with partial scan lines that are aligned and do not butt up against each other.
FIG. 3 illustrates two adjacent bands with partial scan lines that are not aligned and do not butt up against each other.
FIG. 4 illustrates a displacing apparatus for incrementally displacing a supply of recording media past a scanning system in a flat-field imaging system in accordance with the present invention.
FIG. 5 illustrates the flat-field imaging system of FIG. 4 in greater detail.
FIG. 6 is a cross-sectional view of a reference platen of the displacing system.
FIGS. 7-14 illustrate the operation of the displacing apparatus of the present invention.

### DETAILED DESCRIPTION OF THE INVENTION

The features of the present invention are illustrated in detail in the accompanying drawings, wherein like reference numerals refer to like elements throughout the drawings. Although the drawings are intended to illustrate the present invention, the drawings are not necessarily drawn to scale.

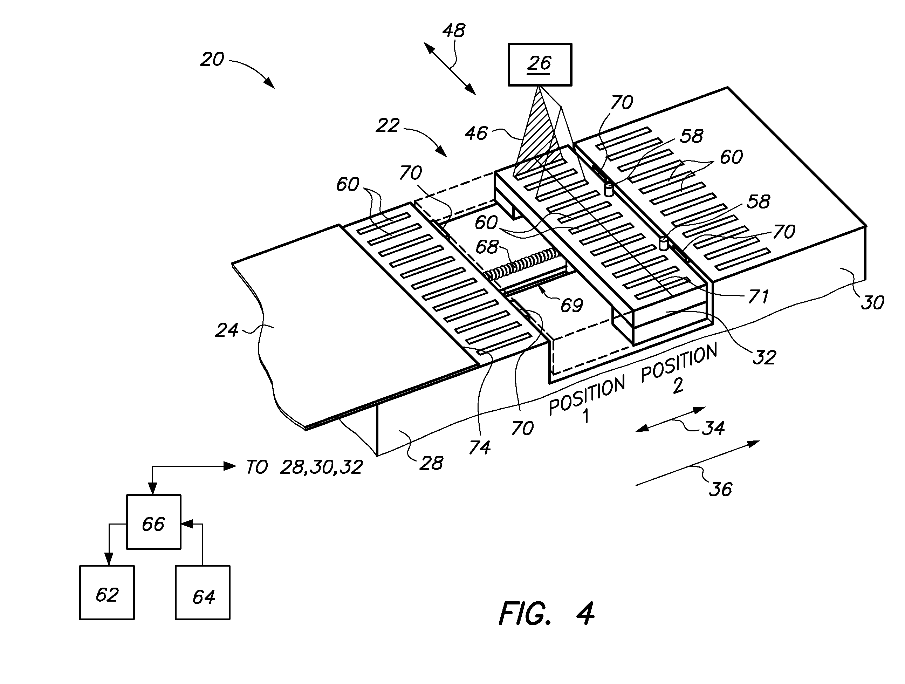

FIG. 4 illustrates a flat-field imaging system 20, including a displacing apparatus 22 for incrementally displacing a supply of recording media 24 past a scanning system 26. The recording media 24 is commonly supplied in discrete, flexible sheets and may comprise a plurality of plates, hereinafter collectively referred to as "plates" or "printing plates." Each printing plate may comprise one or more layers supported by a support substrate, which for many printing plates is a plano-graphic aluminum sheet. Other layers may include one or more image recording (i.e., "imageable") layers such as a photosensitive, radiation sensitive, or thermally sensitive layer, or other chemically or physically alterable layers. Printing plates which are supported by a polyester support are also known and can be used in the present invention. Printing plates are available in a wide variety of sizes, typically ranging, e.g., from 228.6 mm x 304.8 mmm (9" x 12"), or smaller, to 1473.2 mm x 2032 mm (58" x 80"), or larger. Other types of recording media 24 such as rolled film may also be used in the flat-field imaging system 20.

The displacing system 22 includes an entrance platen 28, an exit platen 30, and a movable reference platen 32 that may be selectively displaced between a first position (POSITION 1 (shown in phantom)) adjacent the entrance platen 28 and a second position (POSITION 2) adjacent the exit platen 30 as indicated by directional arrow 34.

As detailed below, the recording media 24 is incrementally displaced along direction 36 during imaging in response to a displacement of the reference platen 32 from POSITION 1 to POSITION 2.

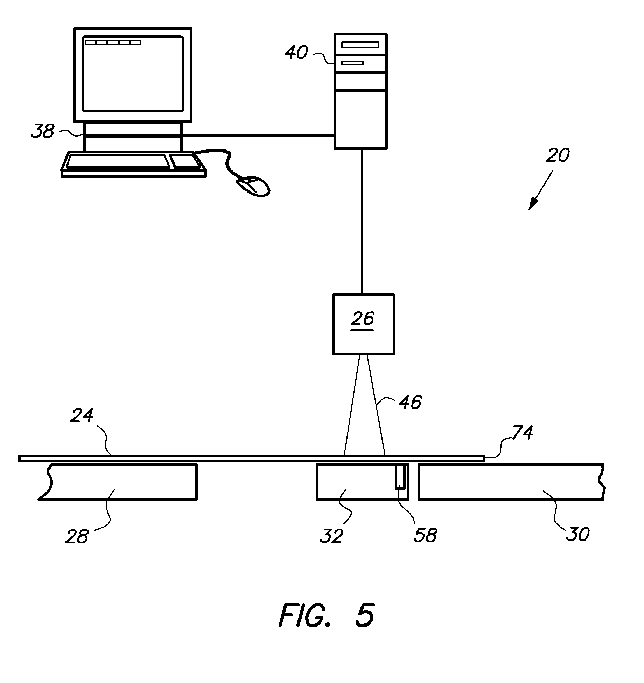

The flat-field imaging system 20 is described in greater detail with reference to FIGS. 5-6. As shown in FIG. 5, the flat-field imaging system 20 generally includes a front end computer or workstation 38 for the design, layout, editing, and/or processing of digital files representing pages to be printed, and a raster image processor (RIP) 40 for processing the digital pages to provide rasterized page data (e.g., rasterized digital files) for driving an image recorder. Scanning system 26 records the rasterized digital files provided by the RIP 40 onto the recording media 24 that is supported by the platens 28, 30, and 32.

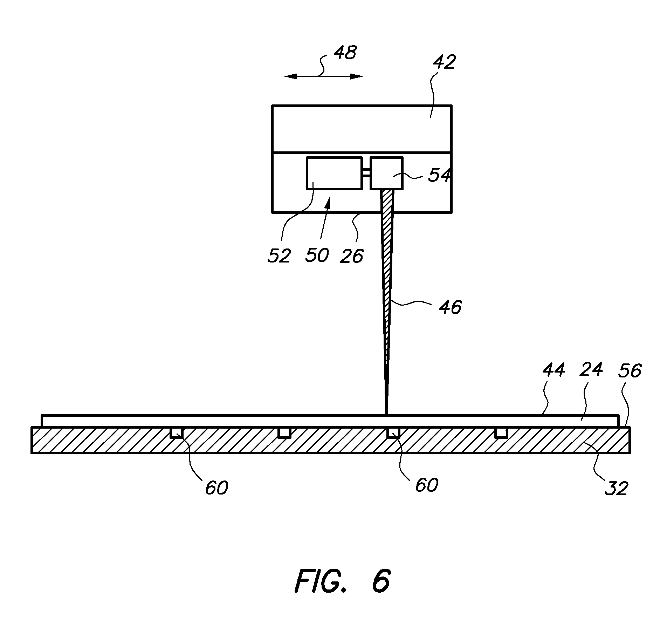

As shown in FIG. 6, the scanning system 26 is coupled to a movable carriage 42. The scanning system 26 records digital data in a manner known in the art onto the imaging surface 44 of the recording media 24 using one or more imaging beams 46. In particular, the scanning system 26 is displaced by the movable carriage 42 in a slow scan axial direction 48 along the reference platen 32 to expose the recording media 24 in a section-wise manner. Other types of imaging systems may also be used in the present invention.

As further illustrated in FIG. 6, the scanning system 26 typically includes a system 50 for generating the imaging beam(s) 46. The system 50 comprises a light or radiation source 52 for producing the imaging beam(s) 46, and an optical system 54 positioned between the radiation source 52 and the media support surface 56 for focusing the imaging beam(s) 46 onto the recording media 24. It should be noted, however, that the system 42 described above is only one of many possible different types of scanning systems that may be used to record image data on the recording media 24.

Referring to both FIGS. 4 and 5, a registration system comprising a plurality of retractable registration pins 58 is provided to accurately and repeatably position the leading edge 74 of the recording media 24 on the reference platen 32 during the initial loading and registration of the recording media 24. The registration pins 58 are retracted after initial registration of the recording media 24. The registration pins 58 may be extended/retracted using any suitable system such as solenoids, pneumatic cylinders, etc. The registration pins 58 are shown in an extended state in FIG. 4 and in a retracted state in FIG. 5. An edge detection system (not shown) may also be provided to locate a side edge of the recording media 24 prior to imaging.

A plurality of vacuum/air openings 60 and associated ports (not shown) are formed in the entrance platen 28, exit platen 30, and reference platen 32, as shown in FIGS. 4 and 6. The vacuum/air openings 60 may comprise grooves as shown, or may be formed in any suitable configuration. A vacuum source 62 (FIG. 4) may be used to selectively draw a vacuum through the vacuum/air openings 60 in one or more of the platens 28, 30, 32. The vacuum holds the recording media 24 against the media support surface of the corresponding platen(s). An air source 64 (FIG. 4) may be used to selectively force air out of the vacuum/air openings 60 in one or more of the platens 28, 30, 32. The air forces the recording media 24 away from the media support surface of the corresponding platen(s). A manifold system 66 may be employed to selectively interconnect the vacuum source 62 and air source 64 to the vacuum/air openings 60 in each platen 28, 30, 32.

A drive system 68 (FIG. 4) is used to reciprocally displace the reference platen 32 between POSITION 1 and POSITION 2. The drive system 68 may comprise a pneumatic cylinder, a lead screw, a pulley/belt system driven by a servo motor, a linear motor, or any suitable system capable of providing linear motion. The reference platen 32 may also be self-propelled. The reference platen 32 is moved a known, fixed amount between POSITION 1 and POSITION 2. This may be accomplished using at least one fixed end stop 70 mounted to the sides of the entrance and exit platens 28, 30, or using encoded position information. Other techniques are also possible. The reference platen 32 may be mounted for linear movement on a rail system 69 having one or more guide rails and linear bearings. Many other known systems for guiding the reference platen 32 between POSITION 1 and POSITION 2 may also be used in the practice of the present invention.

As shown in FIG. 4, a pair of fixed stops 70 may be mounted to the sides of the entrance and exit platens 28, 30. The use of two fixed stops 70 (i.e., a two point contact) on the sides of both the entrance platen 28 and exit platen 30 ensures that the longitudinal axis 71 of the of reference platen 32 in POSITION 1 is parallel to the longitudinal axis 71 of the reference platen 32 in POSITION 2.

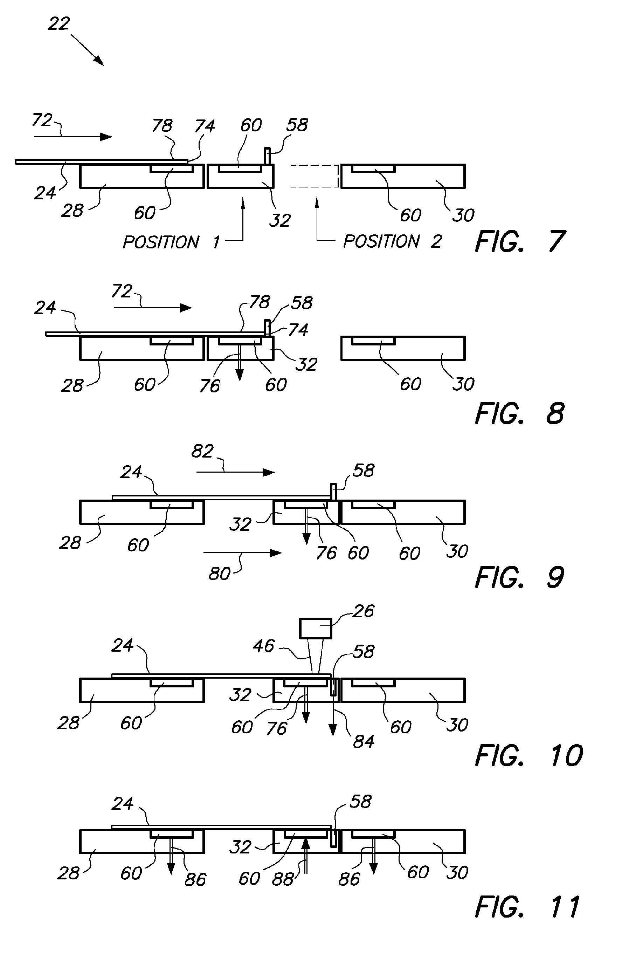

The operation of the displacing apparatus 22 of the present invention is illustrated in FIGS. 7-14. Reference should be made to FIG. 4 for components described, but not illustrated, in FIGS. 7-14. Initially, as shown in FIG. 7, the reference platen 32 is located in POSITION 1. At this time, air is not being drawn into the vacuum/air openings 60 in any of the platens 28, 30, 32. Air may or may not be flowing out of the vacuum/air openings 60 in the entrance and exit platens 28, 30. Recording media 24 is displaced (arrow 72) across the entrance platen 28 toward the reference platen 32 by a drive system or autoloading system (not shown) of a type known in the art. The registration pins 58 are in an extended state for the registration of the recording media 24. Displacement of the recording media 24 continues as shown in FIG. 8 until the leading edge 74 of the recording media 24 contacts, and is registered by, the registration pins 58 that extend out of the reference platen 32. Once the recording media 24 is registered on the reference platen 32, a vacuum is drawn (arrow 76) through the vacuum/air openings 60 in the reference platen 32. The vacuum holds the leading end 78 of the recording media 24 firmly in place against the surface of the reference platen 32.

As shown in FIG. 9, the reference platen 32 is subsequently displaced (arrow 80) toward the exit platen 30 by the drive system 68 (FIG. 4), thereby displacing the recording media 24 toward the exit platen 30 to POSITION 2 as indicated by arrow 82. Displacement continues until the reference platen 32 has been moved a known, fixed distance in direction 80. During the displacement of the reference platen 32, the recording media 24 is held in its registered position on the reference platen 32 by the vacuum 76.

The registration pins 58 may be retracted at any point after initial registration of the recording media 24 on the reference platen 32. The retraction of the registration pins 58 is represented by arrow 84 in FIG. 10.

The recording media 24 is then imaged by the scanning system 26 as shown in FIG. 10 to record a band of partial scan lines (e.g., band 10A containing partial scan lines 12A, (FIG. 1) on the recording media 24. Imaging occurs with the reference platen 32 located in POSITION 2.

The next adjacent band of partial scan lines (e.g., band 10B containing partial scan lines 12B) is imaged after the recording media 24 has been displaced a known, fixed distance corresponding to the width of the band. This is accomplished, as illustrated in FIGS. 11-14, by displacing the reference platen 32 from POSITION 2 back to POSITION 1 and then back to POSITION 2. The ensures that corresponding partial scan lines in each band will be aligned and butt up against each other as shown in FIG. 1.

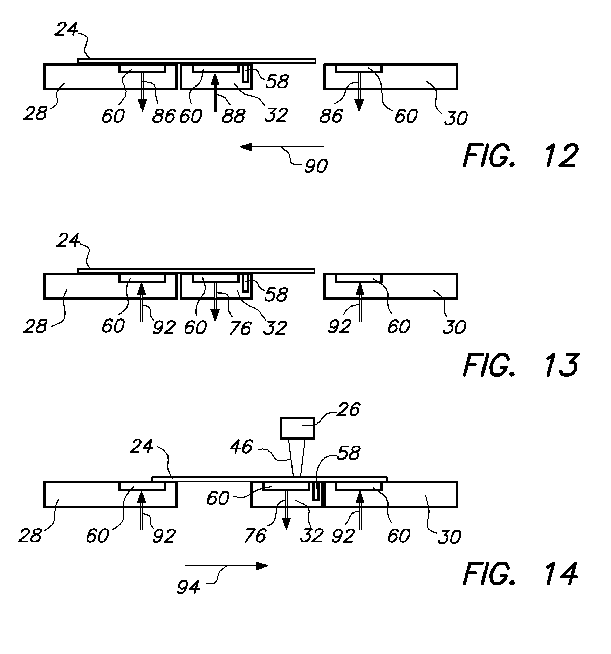

Prior to the displacement of the reference platen 32 from POSITION 2 to POSITION 1, as illustrated in FIG. 11, a vacuum is drawn (arrows 86) through the vacuum/air openings 60 in the entrance and/or exit platens 28, 30. This hold the recording media 24 in place on the entrance and/or exit platens 28, 30, as the reference platen 32 is displaced from POSITION 2 to POSITION 1. Air is fed through the vacuum/air openings 60 in the reference platen 32 toward the underside of the recording media 24 as indicated by arrow 88. This lifts the recording media 24 slightly off of the reference platen 32 to prevent the reference platen 32 from dislodging or otherwise affecting the position of the recording media 24 on the exit and/or entrance platens 28, 30, as the reference platen 32 is displaced (arrow 90, FIG. 12) from POSITION 2 to POSITION 1 by the drive system 68.

As illustrated in FIG. 13, after the reference platen 32 reaches POSITION 1, vacuum is once again drawn (arrow 76) through the vacuum/air openings 60 in the reference platen 32. This holds the recording media 24 firmly in place against the surface of the reference platen 32. Air is fed through the vacuum/air openings 60 in the entrance and exit platens 28, 30, toward the underside of the recording media 24 as indicated by arrows 92. This lifts the recording media 24 slightly off of the entrance and exit platens 28, 30, and reduces the drag of the recording media 24 against the entrance and exit platens 28, 30, as the reference platen 32 is displaced (arrow 94, FIG. 14) from POSITION 1 to POSITION 2 by the drive system 68. After the reference platen 32 and attached recording media 24 have been displaced a known, fixed distance from POSITION 1 to POSITION 2, the next band of partial scan lines can be imaged on the recording media 24 by the scanning system 26. The process described with regard to FIGS. 11-14 is repeated to incrementally displace the recording media 24 as many times as necessary until imaging has been completed.

The foregoing description of the present invention has been presented for purposes of illustration and description. It is not intended to be exhaustive or to limit the invention to the precise form disclosed, and many modifications and variations are possible in light of the above teaching. Such modifications and variations that may be apparent to a person skilled in the art may be included within the scope of this invention.

## Claims

1. An apparatus comprising:
- an entrance platen (28);
- an exit platen (30); and
- a reference platen (32), movable between a first position (POSITION 1) adjacent the entrance platen (28) and a second position (POSITION 2) adjacent the exit platen (30), for incrementally displacing recording media (24) past a scanning system (26) .

2. The apparatus according to claim 1, further including a drive system (68) for reciprocally displacing the reference platen (32) between the first position and the second position.

3. The apparatus according to any one of the previous claims, wherein the reference platen (32) further includes a system for registering (58) the recording media (24), preferably including a plurality of preferably retractable registration pins (58) for registering a leading edge (74) of the recording media (24).

4. The apparatus according to claim 3, wherein the registration pins (58) are extended during the registration of the recording media (24), and wherein the registration pins (58) are retracted during the incremental displacement of the recording media (24).

5. The apparatus according to any one of the previous claims, wherein the entrance platen (28), exit platen (30), and reference platen (32) include vacuum/air openings (60), and
- a vacuum source (62) for selectively drawing a vacuum through the vacuum/air openings (60) in the entrance (28), exit (30), and reference platens (32); and/or
- an air source (64) for selectively forcing air out of the vacuum/air openings (60) in the entrance (28), exit (30), and reference platens (32).

6. The apparatus according to claim 5, wherein the vacuum source (62) is for drawing a vacuum through the vacuum/air openings (60) of the reference platen (32) during the displacement of the reference platen (32) from the first position to the second position and/or the air source (64) is for forcing air out of the vacuum/air openings (60) of the reference platen (32) during the displacement of the reference platen (32) from the second position to the first position.

7. The apparatus according to any one of the previous claims, wherein the scanning system (26) is for imaging a series of bands each containing a plurality of scan lines on the recording media (24).

8. A method for incrementally displacing a supply of recording media (24), comprising:
- securing the recording media (24) to a reference platen (32);
- displacing the recording media (24) by displacing the reference platen (32) from a first position adjacent an entrance platen (28) to a second position adjacent an exit platen (30);
- securing the recording media (24) to at least one of the entrance platen (28) and the exit platen (30);
- releasing the recording media (24) from the reference platen (32); and
- displacing the reference platen (32) from the second position to the first position while holding the recording media (24) stationary.

9. The method according to claim 8, wherein the recording media (24) is secured to the reference platen (32) using a vacuum and wherein releasing the recording media (24) further comprises:
- releasing the vacuum; and
- directing air between the recording media (24) and the reference platen (32).

10. The method according to claims 8 or 9, wherein the recording media (24) is secured to the entrance (28) and exit platens (30) using a vacuum and wherein displacing the recording media (24) further comprises:
- releasing the vacuum at the entrance (28) and exit platens (30) after the recording media (24) has been secured to the reference platen (32); and
- directing air between the recording media (24) and the entrance (28) and exit platens (30).
